(19) **Europäisches Patentamt / European Patent Office / Office européen des brevets**

(11) **EP 1 990 857 A1**

(12) **EUROPEAN PATENT APPLICATION**
published in accordance with Art. 158(3) EPC

(43) Date of publication:
**12.11.2008 Bulletin 2008/46**

(51) Int Cl.:
*H01M 8/04* (2006.01)    *H01M 8/10* (2006.01)

(21) Application number: **07706259.4**

(22) Date of filing: **11.01.2007**

(86) International application number:
**PCT/JP2007/000007**

(87) International publication number:
**WO 2007/083515 (26.07.2007 Gazette 2007/30)**

(84) Designated Contracting States:
**DE FR GB**

(30) Priority: **19.01.2006 JP 2006010600**

(71) Applicants:
- **Kabushiki Kaisha Toshiba**
  **Minato-ku,**
  **Tokyo 105-8001 (JP)**
- **Toyo Seikan Kaisha, Ltd.**
  **Tokyo 100-8522 (JP)**

(72) Inventors:
- **TAKAHASHI, Kenichi**
  **Tokyo 105-8001 (JP)**
- **HASEBE, Hiroyuki**
  **Tokyo 105-8001 (JP)**
- **KAWAMURA, Koichi**
  **Tokyo 105-8001 (JP)**
- **SHIMOYAMADA, Takashi**
  **Tokyo 105-8001 (JP)**

- **YASUI, Hideaki**
  **Tokyo 105-8001 (JP)**
- **YOSHIHIRO, Kenji**
  **Yokohama-shi**
  **Kanagawa 230-0001 (JP)**
- **YAMAMORI, You**
  **Yokohama-shi**
  **Kanagawa 230-0001 (JP)**
- **HAYASHI, Hiroaki**
  **Yokohama-shi**
  **Kanagawa 230-0001 (JP)**
- **IMODA, Daisuke**
  **Yokohama-shi**
  **Kanagawa 230-0001 (JP)**
- **KINOUCHI, Kouki**
  **Yokohama-shi**
  **Kanagawa 230-0001 (JP)**

(74) Representative: **Henkel, Feiler & Hänzel**
  **Patentanwälte**
  **Maximiliansplatz 21**
  **80333 München (DE)**

(54) **FUEL CARTRIDGE FOR FUEL CELL AND FUEL CELL USING THE SAME**

(57)    A fuel cartridge 5 for a fuel cell includes a cartridge body 8 containing liquid fuel for the fuel cell, and anozzlepart 9 supplying the liquid fuel to a fuel cell body. The nozzle part 9 has a nozzle head 12 provided on the cartridge body 8 and an insertion portion 14 which is inserted in a socket part 6 of the fuel cell body, and a valve mechanism (19, 20, 21, 22) arranged in the nozzle head 12. A recess portion 15 is provided in a tip of the insertion portion 14 of the nozzle head 12. Liquid fuel remaining on the tip of the nozzle part 9 is accommodated in the recess portion 15.

FIG. 2

**Description**

Technical Field

The present invention relates to a fuel cartridge for a fuel cell and a fuel cell using the same.

Background Art

To make various portable electronic apparatuses such as laptop computers and mobile phones usable for a long period of time without charging, it is attempted to use fuel cells for power supply of portable electronic apparatuses. Fuel cells are capable of generating electric power just by supplying fuel and air, and have a characteristic of generating electric power continuously for a long period of time by supplying fuel. Accordingly, if a fuel cell can be miniaturized, it can be considered as a system of great advantage as power supply for a portable electronic apparatus.

Since direct methanol fuel cells (DMFC) using methanol fuel which has high energy density are capable of being miniaturized and are also simple in handling of fuel, they are hopefully expected as power supply for portable apparatuses. As a method of supplying liquid fuel in a DMFC, there are known active methods such as gas supply type and liquid supply type, and a passive method such as an internal vaporization type in which liquid fuel in a fuel containing unit is vaporized inside the fuel cell and then supplied to a fuel anode. The passive method is advantageous for miniaturization of DMFCs.

In the passive type DMFC such as the internal vaporization type, liquid fuel in the fuel containing unit is vaporized via a fuel impregnation layer, a fuel vaporization layer, and so on for example and vaporized components of the liquid fuel are supplied to the fuel anode (for example, referred to Patent Reference 1 and 2). To the fuel containing unit, liquid fuel is supplied using a fuel cartridge. In a satellite type (external injection type) fuel cartridge, a coupler constituted of a nozzle and a socket each having a valve mechanism inside is used for performing cutting off and injecting of liquid fuel (refer to Patent Reference 3 for example).

When supplying liquid fuel from the satellite type fuel cartridge to the fuel containing unit of the fuel cell, in view of safety and the like, it is crucial to prevent leakage of the liquid fuel. The fuel cartridge and the fuel containing unit of the fuel cell are constructed so that liquid fuel can be cut off by the coupler (nozzle and socket) having valve mechanisms inside. Regarding a coupling state of the fuel cartridge and the fuel containing unit, a mechanism to seal coupling parts of the nozzle and the socket is applied, thereby preventing leakage of liquid fuel.

As described above, mechanisms to prevent leakage of liquid fuel are applied to various parts in the fuel cartridge and the fuel containing unit. However, when the fuel cartridge is removed from the fuel containing unit, there may be a case that liquid fuel adheres in a liquid state to a tip of the nozzle of the fuel cartridge. It is demanded that even a small amount of liquid fuel adhering to the tip of the nozzle does not come in contact with the operator for the purpose of increasing the safety.

The fuel cartridge is handled by an operator. Accordingly, when an excessive load is applied to the tip of the nozzle while handling, or further when the fuel cartridge is dropped or being applied an impact by accident, the valve mechanism provided in the nozzle may be damaged, which may further lead to leakage of the liquid fuel. Accordingly, it is demanded to prevent damage to the valve mechanism in the tip of the nozzle while handling the fuel cartridge to thereby improve the safety further.

Patent Reference 1: JP-B2 3413111 (Patent Publication)
Patent Reference 2: JP-A 2004-171844 (KOKAI)
Patent Reference 3: JP-A 2004-127824 (KOKAI)

Disclosure of the Invention

An object of the present invention is to provide a fuel cartridge for a fuel cell with improved safety and reliability by preventing liquid fuel remaining on (adhering to) a tip of a nozzle part of the fuel cartridge from contacting the operator. Further, an object of the present invention is to provide a fuel cartridge for a fuel cell with improved safety and reliability by preventing damage to a valve mechanism on a tip side of a nozzle part of the fuel cartridge. Still another object of the present invention is to provide a fuel cell to which such a fuel cartridge is applied.

A fuel cartridge for a fuel cell according to an aspect of the present invention is characterized by including: a cartridge body containing liquid fuel for the fuel cell; and a nozzle part having a nozzle head provided on the cartridge body and a valve mechanism arranged in the nozzle head, the nozzle part supplying the liquid fuel to a fuel cell body, in which the nozzle head has a recess portion provided in a tip of an insertion portion which is inserted in a socket part of the fuel cell body.

A fuel cell according to an aspect of the present invention is characterized by including: the fuel cartridge according to the aspect of the present invention; and a fuel cell body including a fuel containing unit having a socket part coupled detachably to the nozzle part of the fuel cartridge, the socket part having a valve mechanism inside, and an electromotive unit supplied with the liquid fuel from the fuel containing unit to generate electric power.

A coupler according to an aspect of the present invention is characterized by including: a socket having a first valve element and a first biasing member biasing the first valve element in a closing direction; and a plug having a second valve element and a second biasingmember biasing the second valve element in a closing direction, the plug engaged with and coupled to the socket detachably, in which the first and second valve elements are released and brought into communication in a state that the socket and the plug are engaged with and coupled to each other; and in which the plug has a recess portion provided in a tip of an engaging portion engaged with the socket.

Brief Description of Drawings

[FIG. 1] FIG. 1 is a view showing the structure of a fuel cell according to an embodiment of the present invention.

[FIG. 2] FIG. 2 is a view showing structures (in a non-coupling state) of a nozzle part of a fuel cartridge side and a socket part on a fuel cell body side in the fuel cell shown in FIG. 1 with partial cross-sections.

[FIG. 3] FIG. 3 is a view showing a coupling state of the nozzle part and the socket part shown in FIG. 2 with a partial cross-section.

[FIG. 4] FIG. 4 is a perspective view showing a nozzle head of the nozzle part shown in FIG. 2 in magnification.

[FIG. 5] FIG. 5 is a top view of the nozzle head shown in FIG. 4.

[FIG. 6] FIG. 6 is a front view of the nozzle head shown in FIG. 4.

[FIG. 7] FIG. 7 is a cross-sectional view of the nozzle head shown in FIG. 4.

[FIG. 8] FIG. 8 is a cross-sectional view showing an example of a seal by means of the nozzle head of the nozzle part shown in FIG. 2 and a rubber holder of the socket part.

[FIG. 9] FIG. 9 is a cross-sectional view showing another example of a seal by means of the nozzle head of the nozzle part and a rubber holder of the socket part.

[FIG. 10] FIG. 10 is a perspective view showing a spring retention of the socket part shown in FIG. 2 in enlargement.

[FIG. 11] FIG. 11 is a front view showing a state that the spring retention shown in FIG. 10 is attached to a socket body of the socket part.

[FIG. 12] FIG. 12 is a view for explaining release of a coupling state of the nozzle part and the socket part by an excessive rotational force, the view showing a state that cam portions and cam follower portions are engaged.

[FIG. 13] FIG. 13 is a view showing a state that the cam portions shown in FIG. 12 move up while rotating along the cam follower portions.

[FIG. 14] FIG. 14 is a view showing a state that the cam portions shown in FIG. 13 further move up while rotating along the cam follower portions.

[FIG. 15] FIG. 15 is a view showing a state that the coupling state of the cam portions and the cam follower portions shown in FIG. 14 is released.

[FIG. 16] FIG. 16 is a cross-sectional view showing an example of a state that the nozzle part detaches from the socket part by a bending load.

[FIG. 17] FIG. 17 is a cross-sectional view showing another example of a state that the nozzle part detached from the socket part by a bending load.

[FIG. 18] FIG. 18 is a cross-sectional view showing a structural example of an internal vaporization type DMFC as an example of the fuel cell body of the fuel cell shown in FIG. 1.

Explanation of Numerals and Symbols

1 ... fuel cell; 2 ... fuel cell unit; 3 ... fuel containing unit; 4 ... fuel cell body; 5 ... fuel cartridge; 6 ... socket part (female side coupler); 8 ... cartridge body; 9 ... nozzle part (male side coupler); 11 ... nozzle hole; 12 ... nozzle head; 14 ... insertion portion; 15 ... recess portion; 16 ... cam portion; 18 ... valve holder; 19, 35 ... valve; 19a, 35a ... valve head; 19b, 35b ... valve stem; 20,36 ... valve sheet; 21, 37 ... O-ring; 22, 38 ... compression spring; 31 ... socket body; 32 ... rubber holder; 33 ... cam follower portion; 34 ... spring retention.

Best Mode for Carrying out the Invention

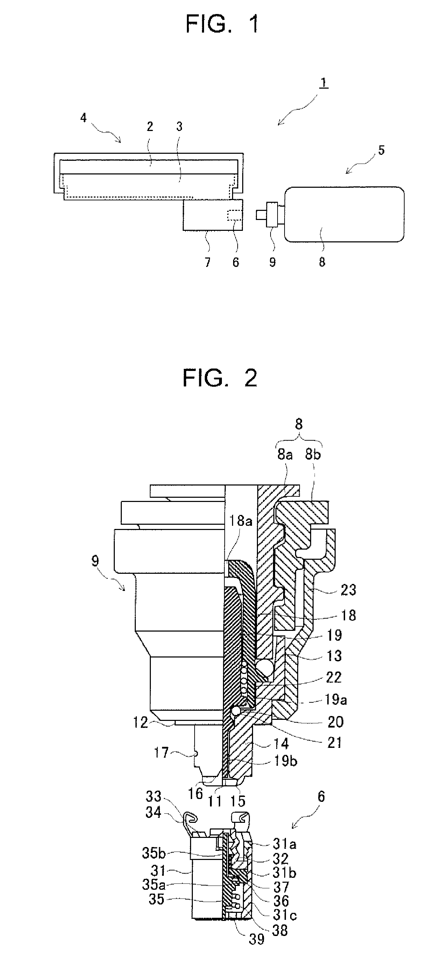

Hereinafter, embodiments of the present invention will be described with reference to the drawings. FIG. 1 is a view showing the structure of a fuel cell according to an embodiment of the present invention. The fuel cell 1 shown in FIG. 1 includes a fuel cell body 4 constituted mainly of a fuel cell unit 2 to be an electromotive unit and a fuel containing unit 3, and a satellite type fuel cartridge 5 supplying liquid fuel to the fuel containing unit 3.

The fuel cell body 4 has the fuel containing unit 3 containing liquid fuel. The fuel containing unit 3 is supplied with liquid fuel by the fuel cartridge 5. On a bottom surface side of the fuel containing unit 3, a fuel supply unit 7 is provided having a socket part 6 to be a supply port of liquid fuel. The socket part 6 includes a valve mechanism and is in a closed state other than when being supplied with liquid fuel.

The fuel cartridge 5 has a cartridge body (container) 8 containing liquid fuel for the fuel cell. On a tip of the cartridge body 8, a nozzle part 9 is provided to be a fuel injection port when supplying the liquid fuel contained therein to the fuel cell body 4. The nozzle part 9 includes a valve mechanism and is kept in a closed state other than when supplying the liquid fuel. The fuel cartridge 5 is coupled to the fuel cell body 4 only when injecting the liquid fuel into the fuel containing unit 3.

In the cartridge body 8 of the fuel cartridge 5, liquid fuel corresponding to the fuel cell body 4 is contained. When the fuel cell body 4 is a direct methanol fuel cell (DFMC), methanol fuel such as methanol solutions with various concentrations, pure methanol, and the like are used as the liquid fuel. The liquid fuel contained in the cartridge body 8 is not limited to methanol fuel and may be liquid fuel of, for example, ethanol fuel such as ethanol solution and pure ethanol, propanol fuel such as propanol solution and pure propanol, glycol fuel such as glycol solution and pure glycol, dimethyl ether, formic acid, and the like.

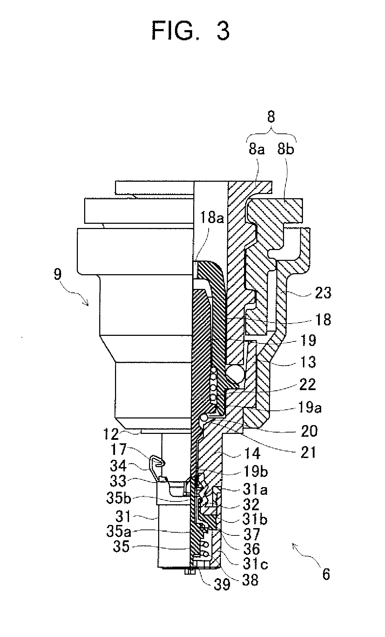

The socket part 6 provided on the fuel containing unit 3 of the fuel cell body 4 and the nozzle part 9 provided on the cartridge body 8 of the fuel cartridge 5 constitute a pair of coupling mechanisms (coupler). A specific structure of the coupler constituted of the socket part 6 and the nozzle part 9 will be described with reference to FIG. 2 and FIG. 3. FIG. 2 shows a state before coupling the nozzle part 9 of the fuel cartridge 5 and the socket part 6 of the fuel cell body 4, FIG.3 shows a state after the nozzle part 9 and the socket part 6 are coupled. FIG. 2 and FIG. 3 are views mainly showing structures of the nozzle part 9 and the socket part 6 with partial cross-sections.

In the coupler coupling the fuel cell body 4 and the fuel cartridge 5, the nozzle part (male side coupler/plug) 9 as a cartridge side coupling mechanism has a nozzle head 12 in which a nozzle hole 11 is opened on a tip side. The nozzle head 12 has a base portion 13 to be fixed to a tip opening part of the cartridge body 8 and an insertion portion 14 to be inserted to the socket part 6. The insertion portion 14 in a cylindrical shape is formed projecting from the base portion 13 so that an axial direction thereof is in parallel to an insertion direction of the nozzle part 9.

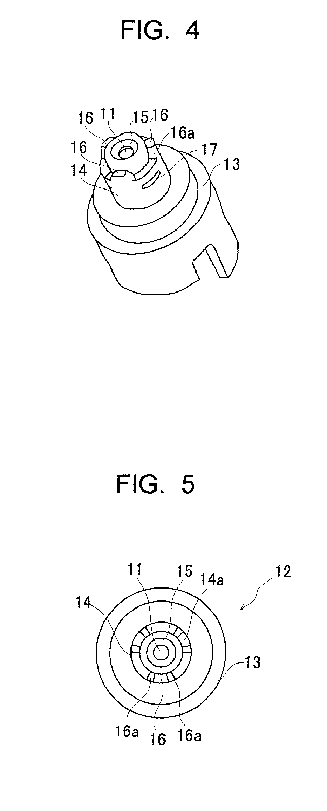

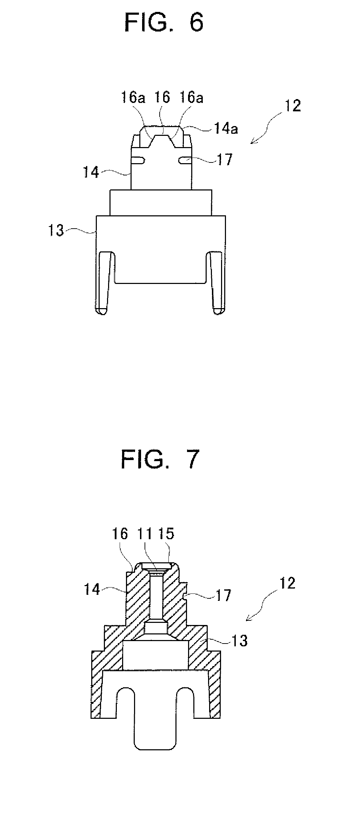

In a tip of the insertion portion 14 of the nozzle head 12, a recess portion 15 is provided as shown in FIG. 4 to FIG. 7. The nozzle hole 11 opens in the recess portion 15. Specifically, the recess portion 15 is provided so as to make a recess in a tip surface of the insertion portion 14, and the nozzle hole 11 opens in a bottom surface of this recess portion 15. By thus allowing the nozzle hole 11 to open in the recess portion 15 provided in the tip of the insertion portion 14, a substantial tip of the nozzle hole 11 is constituted by the bottom surface of the recess portion 15. As will be described later, the recess portion 15 functions as an accommodating portion of liquid fuel adhering to (remaining on) the tip side of the nozzle part 9, which prevents the operator from contacting the liquid fuel.

Furthermore, the substantial tip of the nozzle hole 11 is formed on the bottom of the recess portion 15, a tip of the valve mechanism is made to be arranged substantially on the bottom of the recess portion 15. Therefore, when the operator applies an excessive load to the tip of the nozzle part while handling, or further when the operator drops it or applies an impact thereto by accident, damage to the valve mechanism on the tip side of the nozzle part 9 can be prevented. Accordingly, leakage of liquid fuel due to damage to the valve mechanism can be prevented as well.

On an outer periphery of the insertion portion 14 of the nozzle head 12, cam portions 16 are provided as members for releasing the coupling state of the nozzle part 9 and the socket part 6 when an excessive rotational force is applied to the fuel cartridge 5. The cam portions 16 are formed at positions one step down from the tip to a root side of the insertion portion 14, and each have a cam surface 16a sloping in a circumferential direction of the insertion portion 14. Specifically, the cam portions 16 are each constituted of a cam surface 13 having sloping surfaces projecting upward with respect to the circumferential direction of the insertion portion 14 on both sides respectively in the circumferential direction. The cam portions 16 are provided respectively at several positions (three positions in FIG. 4 to FIG. 7) in the circumferential direction of the insertion portion 14.

As described above, since the cam portions 16 are formed at the positions one step down from the tip of the outer peripheral surface of the insertion portion 14, the insertion portion 14 is in a state that only a tip portion 14a having the recess portion 15 is projected therefrom. This tip projecting portion 14a of the insertion portion 14 functions as a substantial insertion portion to the socket part 6. This tip projecting portion 14a of the insertion portion 14 has an outer peripheral corner in a curved surface (R shape). This makes the nozzle part 9 easily removable from the socket part 6 when an excessive bending load is applied to the fuel cartridge 5. This point will be described later. Furthermore, in the outer peripheral surface of the insertion portion 14, grooves 17 with which a spring retention (described later) as a coupling retention member for the nozzle part 9 and the socket part 6 engages are formed.

A valve holder 18 in a cup shape is arranged inside the base portion 13 of the nozzle head 12. The valve holder 18 defines a valve chamber, and a tip side outer edge portion thereof is sandwiched and fixed between the cartridge body 8 and the base portion 13. A valve 19 is arranged in the valve holder 18. The valve 19 includes a valve head 19a and a valve stem 19b. The valve head 19a is arranged in the valve chamber defined by the valve holder 18. The valve stem 19b is housed in the insertion portion 14 in a cylindrical shape.

The valve 19 having the valve head 19a and the valve stem 19b is constructed to be capable of moving back and forth in the axial direction (insertion direction of the nozzle part 9). An O-ring 21 is arranged between the valve head 19a and a valve sheet 20 formed inside the base portion 13. To the valve 19, a force to press the valve head 19a against the valve sheet 20 is applied by elastic members such as a compression spring 22 and so forth, and the O-ring 21 is pressed by them.

Since the elastic members such as the compression spring 22 and so forth are exposed to the liquid fuel passing through the nozzle part 9, it is preferable that the elastic members are formed of a material having excellent corrosion resistance and the like. It is desirable to use a metal spring (for example a spring constituted of a spring steel) subjected to passivation processing, gold coating or the like for the compression spring 22. For these elastic member, O-ring 21, and so on, an elastic member, which is constituted of an elastomer having compression set in the range of 1 to 80 and hardness (type A) in the range of 40 to 70, which will be described later, and limit in operating hours of 10000 or longer in a performance test of the fuel cell, is also effective for assuring a sealing property when engaged or in use.

In a normal state (state that the fuel cartridge 5 is separated from the fuel cell body 4), the valve head 19a is pressed against the valve sheet 20 via the O-ring 21, thereby making a channel in the nozzle part 9 in a closed state. On the other hand, when the fuel cartridge 5 is coupled to the fuel cell body 4 as will be described later, the valve stem 19b moves back and the valve head 19a moves away from the valve sheet 20, thereby turning the channel in the nozzle part 9 to an open state. A communication hole 18a is provided in a bottom portion of the valve holder 18, and through this communication hole 18a as a passage for liquid fuel, the liquid fuel in the cartridge body 8 flows into the nozzle part 9.

Further, a container nozzle 23 is arranged outside the nozzle head 12. By attaching the container nozzle 23 to the cartridge body 8 by screwing for example, the nozzle part 9 having the nozzle head 12, the valve 19, and so on is fixed to the tip portion (tip portion having an opening) of the cartridge body 8. FIG. 2 and FIG. 3 show the cartridge body 8 having a multilayer structure, in which 8a denotes an internal container to be in direct contact with liquid fuel such as methanol fuel, and 8b denotes an external container (hard case) protecting the internal container 8a.

The socket part (female side coupler/socket) 6 as a fuel cell side coupling mechanism has a socket body 31 in a cylindrical shape. The socket body 31 has an upper body portion 31a, a middle body portion 31b, and a lower body portion 31c, which are integrated and embedded in the fuel supply unit 7 (not shown in FIG. 2 and FIG. 3) of the fuel cell body 4. On the middle body portion 31b of the socket body 31, a rubber holder 32 as an elastic body holder is disposed. The rubber holder 32 is given elasticity in an axial direction based on a bellows shape and a material characteristic (rubber elasticity). The rubber holder 32 is a seal member forming a seal with the insertion portion 14 of the nozzle head 12, and the inside thereof is a passage for liquid fuel.

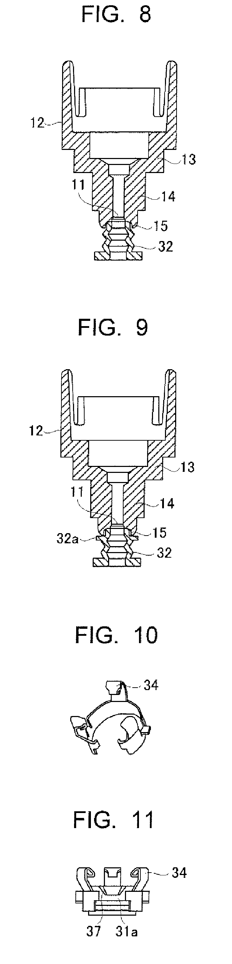

Specifically, as shown in FIG. 8, by fitting a tip of the rubber holder 32 into the recess portion 15 provided in the tip of the insertion portion 14 of the nozzle head 12, a seal is formed between the rubber holder 32 and the insertion portion 14 of the nozzle head 12. The actual seal is formed between a tip surface of the rubber holder 32 and the bottom surface of the recess portion 15 (surface seal), or in the case where the bottom surface of the recess portion 15 is formed as a sloping surface, the actual seal is formed between this sloping surface and a tip corner of the rubber holder 32 (line seal). Thus, the recess portion 15 provided in the tip of the insertion portion 14 of the nozzle head 12 contributes also to improvement in seal property with the socket part 6 (specifically the rubber holder 32).

Further, a tip of the valve stem 19b of the valve mechanism is arranged in the recess portion 15. The tip of the valve stem 19b is arranged substantially on the bottom portion of the recess portion 15. Accordingly, when the operator applies an excessive load to the tip of the nozzle part 9 while handling, or further when the operator drops it or applies an impact thereto by accident, damage to the valve mechanism on the tip side of the nozzle part 9 can be prevented. Therefore, it becomes possible to prevent leakage of liquid fuel due to damage to the valve mechanism.

It is preferable that seals are provided at several positions between the rubber holder 32 and the insertion portion 14 of the nozzle head 12, as shown in FIG. 9 for example. Specifically, it is preferable that the coupling mechanisms constituted of the socket part 6 and the nozzle part 9 include a plurality of seal parts preventing leakage of liquid fuel to the outside when the coupling mechanisms are coupled. Thereby, it becomes possible to prevent leakage of liquid fuel to the outside more securely. The rubber holder 32 shown in FIG. 9 forms a plurality (two positions) of seal parts with the insertion portion 14 of the nozzle head 12 by the tip portion in contact with the bottom surface of the recess portion 15 and a ring part 32a in contact with the tip of the insertion portion 14.

Since the rubber holder (elastic member) 32 is exposed to the liquid fuel passing through the socket part 6, it is preferable that the rubber holder is formed of a material having excellent methanol resistance and the like. Specifically, it is preferable to be formed of an elastomer having compression set in the range of 1 to 80 and hardness (type A) in the range of 40 to 70, and limit in operating hours of 10000 or longer in a performance test of the fuel cell. Specific examples of the elastomer include a peroxide-crosslinked ethylene/propylene/diene copolymer, dynamically cross linked olefin thermoplastic elastomer, crystalline pseudo-crosslinked olefin thermoplastic elastomer, and the like. Such elastic members may also be used instead of the spring or the like of the valve mechanisms.

By setting the compression set of the elastomer in the range of 1 to 80 so as to give a specific resilience, it is possible to attain a sufficient sealing property of the cartridge for the fuel cell, the fuel cell, or the coupler while in use. By setting the hardness (type A) of the elastomer in the range of 40 to 70, deformation of the cartridge for the fuel cell, the fuel cell, or the coupler when coupled during production can be prevented, and it is possible to attain a sufficient sealing property.

The compression set is a value such that a distortion amount of elastomer is measured after processing with 25% distortion at 70°C for 24 hours in accordance with JIS K6262 "Method of testing compression set of vulcanized rubber and thermoplastic rubber." The hardness (type A) is a value measured by a method in accordance with JIS K6253 "Method of testing hardness of vulcanized rubber and thermoplastic rubber (durometer type A)."

The performance test of the fuel cell is carried out with "power generating cell output density: 37.5 mW/cm$^2$; anode: (standard solution) 5 vol% MeOH 0.1 cc/min/cm$^2$; cathode: air 32 cc/min/cm$^2$; temperature: 30°C." The cell is subjected to aging and used for the test after it is confirmed that electromotive voltage of 0.375 V with current density of 100 mA/cm$^2$ can be attained. The MeOH is prepared using purified pure water that shows an electric resistance value larger than 18 MΩ·cm and using methanol (super high-grade) made by Wako Pure Chemical and Milli-Q (Ultrapure Organic Cartridge). The test procedure is as follows.

In the cartridge with interior content of 50 cc, 0.03 g of finely cut pieces of elastomer are immersed in 25 cc of the methanol (super high-grade). The cartridge is sealed with a cap including a gasket made of tetrafluoroethylene and stored at 60°C for one week. Thereafter, a methanol solution prepared to be 5 vol% using the Milli-Q is used as a test solution. Using the standard solution as fuel, it is confirmed that the electromotive voltage of 0.375 V or larger can be attained, and generated electromotive power is taken as initial electromotive voltage (V0). Subsequently, as the fuel is switched to the test solution to conduct the test, the electromotive voltage (V1) decreases over time. Then, the time of test by which the degree of decrease in electromotive voltage [(V1 - V0)/V0 x 100] becomes 3% is taken as limit in operating hours (T).

On an upper surface of the upper body portion 31a of the socket body 31, there are formed cam follower portions 33 corresponding to the cam portions 16 provided on the outer periphery of the insertion portion 14 of the nozzle head 12. The cam follower portions 33 are formed as trenches corresponding to the projecting shapes of the cam portions 16. The cam follower portions 33 are constructed so as not to contact the cam portions 16 until the socket part 6 and the nozzle part 9 are coupled. The cam portions 16 and the cam follower portions 33 have paired shapes, and thus it is possible to prevent mistaken injection of liquid fuel or the like by defining the shapes according to the liquid fuel for example.

Specifically, the shapes of the cam portions 16 and the cam follower portions 33 are made respectively in shapes corresponding to specific liquid fuel. In other words, by changing the shapes of the cam portions 16 and the cam follower portions 33 according to the type, concentration and so on of the liquid fuel, it becomes possible that the cam portions 16 and the cam follower portions 33 engage only when the nozzle part 9 of the fuel cartridge 5 containing liquid fuel corresponding to the fuel cell body 4 is coupled to the socket part 6 of the fuel containing unit 3. Accordingly, only the liquid fuel corresponding to the fuel cell body 4 is supplied, which makes it possible to prevent operation failure, decrease in characteristics and/or the like due to mistaken injection of liquid fuel.

Further, a spring retention 34 which functions as a coupling retention member for the nozzle part 9 and the socket part 6 is attached on the upper body portion 31a of the socket body 31 as shown in FIG. 10 and FIG. 11. The spring retention 34 has a spring force (restoring force) inward in the axial direction of the socket part 6, and engages with the grooves 17 provided in the outer peripheral surface of the insertion portion 14 by this restoring force. Thereby, the coupling state of the nozzle part 9 and the socket part 6 is retained. The spring retention 34 is constructed to engage with the grooves 17 at several positions. Releasing of coupling by the cam portions 16 and the cam follower portions 33 and retaining of coupling by the spring retention 34 are described later.

A valve 35 is arranged in the socket body 31. The valve 35 has a valve head 35a and a valve stem 35b. The valve head 35a is arranged in a valve chamber defined by the middle body portion 31b and the lower body portion 31c. The valve stem 35b is housed in the rubber holder 32. The valve 35 as such is constructed to be capable of moving back and forth in the axial direction (insertion direction of the nozzle part 9). An O-ring 37 is arranged between the valve head 35a and a valve sheet 36 formed on a lower surface side of the middle body portion 31b.

A force to press the valve head 35a against the valve sheet 36 is applied constantly to the valve 35 by elastic members such as a compression spring 38 and so forth, and the O-ring 37 is pressed by them. In a normal state (state that the fuel cartridge 5 is separated from the fuel cell body 4), the valve head 35a is pressed against the valve sheet 36 via the O-ring 37, thereby making a channel in the socket part 6 in a closed state. When the fuel cartridge 5 is coupled to the fuel cell body 4, the valve stem 35b moves back and the valve head 35a moves away from the valve sheet 36, thereby making the channel in the socket part 6 in an open state.

A communication hole 39 connected to the fuel containing unit 3 via the fuel supply unit 7 is provided in the lower body portion 31c of the socket body 31. Thus, in the socket part 6, a channel provided in the socket body 31 is connected to the fuel containing unit 3 via the communication hole 39 provided in the lower body portion 31c. By opening the channels in the nozzle part 9 and the socket part 6 by turning the valves 19, 35 to open states, the liquid fuel contained in the fuel cartridge 5 can be injected into the fuel containing unit 3 via the nozzle part 9 and the socket part 6.

When supplying the liquid fuel contained in the fuel cartridge 5 to the fuel containing unit 3 of the fuel cell body 4, the nozzle part 9 of the fuel cartridge 5 is inserted in and coupled to the socket part 6. When the nozzle part 9 is inserted in the socket part 6, first the recess portion 15 provided in the tip of the insertion portion 14 of the nozzle head 12 contacts the tip of the rubber holder 32, thereby establishing a seal on the periphery of the channels before the valves turn to open states. The seal between the insertion portion 14 and the rubber holder 32 is as described above, which may be a seal made at one position shown in FIG. 8 or seals made at several positions (two positions) as shown in FIG. 9.

When the nozzle part 9 is inserted in the socket part 6 from the state that the insertion portion 14 of the nozzle head 12 and the rubber holder 32 are in contact, tips of the valve stem 19b of the nozzle part 9 and the valve stem 35b of the socket part 6 butt into each other. When the nozzle part 9 is inserted further in the socket part 6 from this state, the valve 35 of the socket part 6 moves back to completely release the channel thereof, and thereafter the valve 19 of the nozzle part 9 moves back, thereby establishing a fuel channel. At the same time as this establishing of the fuel channel, the spring retention 34 of the socket part 6 engages with the grooves 17 provided in the outer peripheral surface of the insertion portion 14 of the nozzle head 12, thereby retaining the coupling state of the nozzle part 9 and the socket part 6.

In this manner, by coupling the nozzle part 9 and the socket part 6 and turning the valve mechanisms provided therein to open states respectively so as to open the fuel channel, the liquid fuel contained in the fuel cartridge 5 can be supplied to the fuel containing unit 3 of the fuel cell body 4. After supplying of the liquid fuel is completed, the fuel cartridge 5 is removed therefrom to release the coupling of the nozzle part 9 and the socket part 6. At this time, the valve mechanisms of the nozzle part 9 and the socket part 6 return to closed states respectively by the release of the coupling state, and thus the liquid fuel does not leak from the fuel cartridge 5 and the fuel containing unit 3. However, a slight amount of liquid fuel adhering to surfaces of the valve stems 19b, 35b and the like may remain on the tip side of the nozzle part 9.

Even a slight amount of liquid fuel remaining on (adhering to) the tip side of the nozzle part 9, it is crucial to prevent contact with the operator for the purpose of increasing the safety or the like. In this viewpoint, the recess portion 15 is provided in the tipof the insertion portion 14 of the nozzle head 12 in this embodiment. The contact surface with the rubber holder 32 exists inside the recess portion 15, and hence even when liquid fuel remains on the tip side of the nozzle part 9, this remaining liquid fuel turns out to be contained in the recess portion 15. Therefore, the operator does not touch the liquid fuel, and thus the safety and reliability of the fuel cartridge 5 and the fuel cell 1 using the fuel cartridge 5 can be increased.

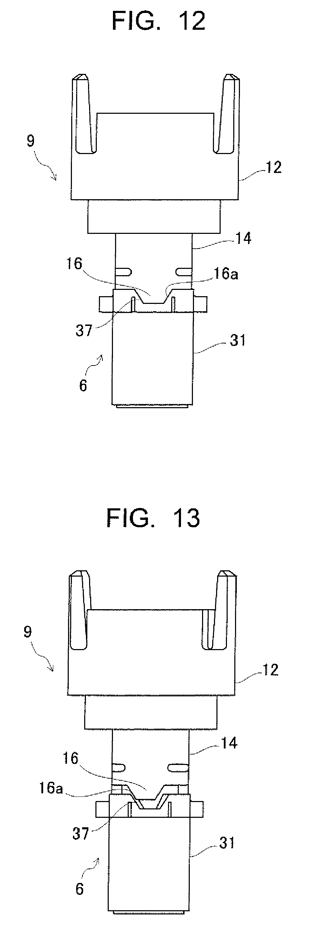

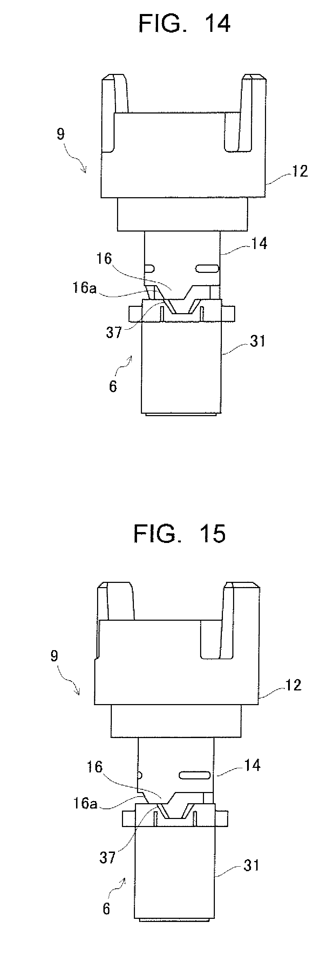

Now, to further increase the safety and reliability of the fuel cartridge 5 and the fuel cell 1 using the fuel cartridge 5, it is needed to make the nozzle part 9 easily detachable from the socket part 6 when an excessive bending load, rotational force, or the like is applied to the fuel cartridge 5 coupled to the fuel containing unit 3. In the case that an excessive rotational force is applied to the fuel cartridge 5, the coupling state is released based on the cam portions 16 and the cam follower portions 33 as described above. Specifically, as shown in FIG. 12 to FIG. 15, the cam surfaces 16a of the cam portions 16 and the cam follower portions (cam follower trenches) 33 rotate while being in contact, and thus the force in a direction of the center axis acts to separate the nozzle part 9 and the socket part 6, thereby releasing the coupling state thereof.

In the case that an excessive bending load is applied to the fuel cartridge 5, particularly the nozzle part 9 can be damaged easily. Specifically, the nozzle part 9 of the fuel cartridge 5 tends to be decreased in diameter along with miniaturization of the fuel cell body 4. The nozzle part 9 with a decreased diameter may be damaged when a bending load (force in a direction having an angle to the insertion direction of the fuel cartridge 5) is applied to the fuel cartridge 5. Specifically, it is highly possible that the insertion portion 14 projecting from the base portion 13 of the nozzle head 12 breaks off. The riskof breakage of the nozzle part 9 increases as the decrease in diameter proceeds, and further the nozzle part 9 becomes easily breakable when it is formed of a material having poor toughness against a bending load, such as super engineering plastic, general-purpose engineering plastic, or the like.

For example, since the nozzle head 12 and the valve 19 of the nozzle part 9 directly contact methanol fuel or the like, it is preferable that constituting materials thereof have methanol resistance. Examples of such materials include general-purpose engineering plastics such as polyethylene terephthalate (PET), polybutylene terephthalate (PBT), polyacetal (POM), and the like, and super engineering plastics such as polyphenylene sulfide (PPS), polyetheretherketone (PEEK), liquid crystal polymer (LCP), and the like. Since they have poor toughness, they may be broken when a bending load is applied.

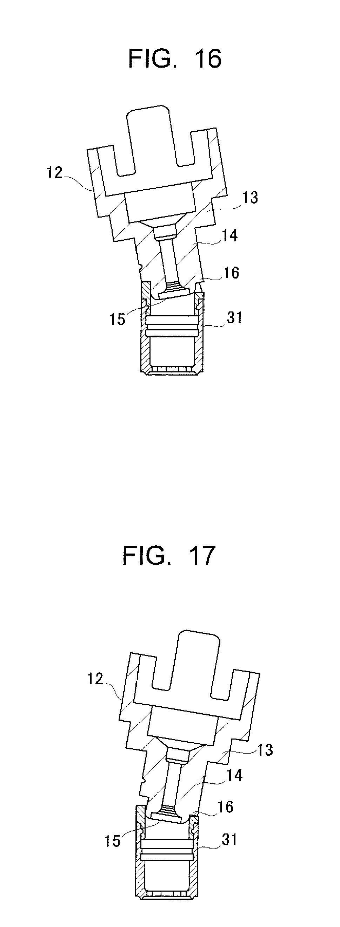

Regarding the bending load, it is effective that the tip projecting portion 14a of the insertion portion 14, which functions as the substantial insertion portion as described above, has an outer peripheral corner in a curved surface (R shape). This makes the nozzle part 9 easily detachable from the socket part 6 when an excessive bending load is applied to the fuel cartridge 5 as shown in FIG. 16 and FIG. 17. FIG. 16 shows a state that a bending load with a fulcrum at a portion where the cam portions 16 are not present is applied. FIG. 17 shows a state that a bending load with a fulcrum at one of the cam portions 16 is applied. In either case, the nozzle part 9 becomes easily detachable by making the outer periphery of the tip projecting portion 14a of the insertion portion 14 have a curved surface.

However, depending on the shape (insertion length for example), material, and the like of the insertion portion 14 of the nozzle part 9, it is conceivable that the nozzle part 9 is damaged due to an excessive bending load. In this viewpoint, it is preferable to allow the nozzle part 9 (specifically the insertion portion 14) to deform and detach from the socket part 6 when a bending load is applied to the fuel cartridge 5. Specifically, the insertion portion 14 of the nozzle head 12 (including the base portion 13 in the case where the base portion 13 is integrally formed with the insertion portion 14) is formed by resin which elastically deforms so as to detach from the socket part 6 when a bending load is applied to the fuel cartridge 5. Thus, by applying a part formed of soft resin which easily deforms to the nozzle head 12, breakage of the nozzle part 9 can be suppressed.

The deformation of the nozzle head 12 is not limited to elastic deformation, and a part thereof may be allowed to deform plastically. Further, detachment of the nozzle part 9 from the socket part 6 may be facilitated by allowing a portion of the socket part 6 to deform elastically or plastically. By allowing a portion of the nozzle part 9 or the socket part 6 to deform with respect to a bending load to the fuel cartridge 5, the nozzle part 9 can be allowed to detach from the socket part 6 without breakage when the bending load is applied to the fuel cartridge 5 coupled to the fuel cell body 4. Accordingly, it becomes possible to suppress occurrence of a problem (such as leakage of liquid) due to breakage of the nozzle part 9 of the fuel cartridge 5 in particular.

For realizing elastic deformation or plastic deformation of the nozzle part 9 and the socket part 6, it is preferable that resin having elasticity modulus for bending of 1800 MPa or lower based on JIS K7171 is applied to the materials thereof. Such resin can be applied to a part of the nozzle part 9 and/or the socket part 6. Using resin having elasticity modulus for bending of 1800 MPa or lower, elastic deformation and plastic deformation of the nozzle part 9 can be realized more reliably. In other words, when a bending load is applied to the fuel cartridge 5 coupled to the fuel cell body 4, it is possible to allow detachment from the socket part 6 with better repeatability without breaking the nozzle part 9 and the valve mechanism therein.

Examples of resin that satisfy the above-described conditions include low-density polyethylene (LDPE), high-density polyethylene (HDPE), linear low-density polyethylene (LLDPE), cross linked high-density polyethylene (XLPE), high molecular weight polyethylene (HMWPE), ultra high molecular weight polyethylene (UHMWPE), polypropylene (PP), propylene copolymer (PPCO), and the like. Further, since the constituting material of the nozzle part 9 contacts methanol fuel or the like, it is preferable to have methanol resistance.

Regarding the methanol resistance of resin as a constituting material of the nozzle part 9 (specifically the nozzle head 12), it is preferable to satisfy mass change ratio of 0. 3% or lower, length change ratio of 0.5% or lower, thickness change ratio of 0.5% or lower in an immersion test in pure methanol in accordance with JIS K7114 "Methods of testing plastics for resistance to chemicals." When values of the respective change ratios are larger than the above values, it is possible that dissolution of or a stress cracking in the nozzle part 9 occurs when methanol fuel or the like is accommodated in the fuel cartridge 5 and subjected to practical use. Therefore, practical durability and/or reliability of the fuel cartridge 5 decrease.

The mass change ratio, the length change ratio and the thickness change ratio of resin by an immersion test in pure methanol are measured as follows. First, as a test piece, a plate of 30 mm x 30 mm x thickness 2 mm is prepared. The mass (M1), the length (L1), and the thickness (T1) of this test piece are measured. Next, the test piece is immersed completely in a test solution (pure methanol having concentration of 99.8%) at 23 $\pm$ 2°C, and is left at rest for seven days with the temperature being maintained. Thereafter, the test piece is taken out of the test solution and washed by water, moisture adhering to the surface of the test piece is removed, and thereafter the mass (M2), length (L2), and thickness (T2) after the test are measured. The lengths (L1, L2) are each taken from an average value of lengths of the test piece in longitudinal and lateral directions. The thicknesses (T1, T2) are each taken from an average value of thicknesses measured at five positions which are a center portion and corners (5 mm inside from an edge) of the test piece.

From the mass (M1), length (L1), thickness (T1) of the test piece before the test, and the mass (M2) length (L2), thickness (T2) after the test, the mass change ratio M, the length change ratio L and the thickness change ratio T are calculated based on the following equation (1), equation (2), and equation (3), respectively.

$$M = \{(M2 - M1)/M1\} \times 100 \ (\%) \ ... \ (1)$$

$$L = \{(L2 - L1)/L1\} \times 100 \ (\%) \ ... \ (2)$$

$$T = \{(T2 - T1)/T1\} \times 100 \ (\%) \ \dots \ (3)$$

Table 1 shows elasticity modulus for bending and methanol resistance (mass change ratio, length change ratio and thickness change ratio by an immersion test in pure methanol) of low-density polyethylene (LDPE), high-density polyethylene (HDPE), linear low-density polyethylene (LLDPE), high molecular weight polyethylene (HMWPE), ultra high molecular weight polyethylene (UHMWPE), polypropylene (PP).

[Table 1]

|  | Elasticity Modulus (MPa) | Methanol Resistance | | |
|---|---|---|---|---|
|  |  | Mass Change Ratio (%) | Average Length Change Ratio (%) | Average Thickness Change Ratio (%) |
| LDPE | 220 | 0.04 | 0.17 | 0.10 |
| HDPE | 1000 | 0.03 | 0.09 | 0.02 |
| LLDPE | 440 | 0.04 | 0.10 | 0.04 |
| HMWPE | 1590 | 0.18 | 0.38 | 0.12 |
| UHMWPE | 790 | 0.04 | 0.01 | 0.03 |
| PP | 1450 | 0.14 | 0.38 | 0.01 |

Components other than the nozzle head 12 of the nozzle part 9 and components of the socket part 6 can be formed of the above-described super engineering plastics (PEEK, PPS, LCP, or the like), or general-purpose engineering plastics (PET, PBT, POM, or the like). As long as strength or coupling strength as a coupler can be maintained, soft resin can be applied to parts other than the nozzle head 12.

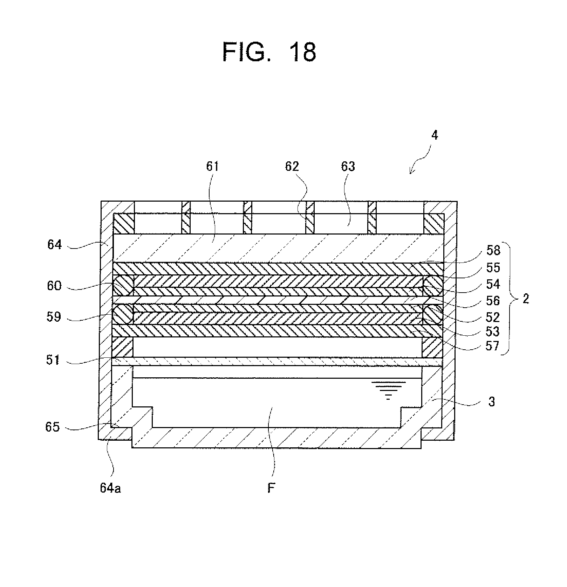

Next, the structure of the fuel cell body 4 will be explained. The fuel cell body 4 is not particularly limited, and for example a DMFC of passive type or active type can be applied, to which a satellite type fuel cartridge 5 is coupled as necessary. Here, an embodiment applying a DMFC of internal vaporization type to the fuel cell body 4 is explained with reference to FIG. 18. The DMFC 4 of internal vaporization type (passive type) shown in FIG. 18 has, in addition to the fuel cell unit 2 constituting an electromotive unit and the fuel containing unit 3, a vapor/liquid separating film 51 interposed therebetween.

The fuel cell unit 2 has a membrane electrode assembly (MEA) constituted of an anode (fuel anode) having an anode catalyst layer 52 and an anode gas diffusion layer 53, a cathode (oxidant electrode/air electrode) having a cathode catalyst layer 54 and a cathode gas diffusion layer 55, and a proton (hydrogenion)-conductive electrolyte film 56 sandwiched by the anode catalyst layer 52 and the cathode catalyst layer 54. Examples of catalysts contained in the anode catalyst layer 52 and the cathode catalyst layer 54 include single elements of the platinum group such as Pt, Ru, Rh, Ir, Os, Pd, and so on, alloys including elements of the platinum group, and the like.

For the anode catalyst layer 52, it is preferable to use Pt-Ru, Pt-Mo or the like having strong resistance against methanol and carbon monoxide. For the cathode catalyst layer 54, it is preferable to use Pt, Pt-Ni, or the like. A supported catalyst using a conductive support such as carbon material or a non-supported catalyst may be used. Examples of a proton conductive material constituting the electrolyte film 56 include fluorine resin such as perfluoro sulfonic acid polymer having the sulfonic acid group (Naf ion (name of product made by Dupont), Flemion (name of product made by Asahi Glass Co., Ltd), or the like), hydrocarbon resin having sulfonic acid group, inorganic substances such as tungstic acid and phosphotungstic acid, and the like.

The anode gas diffusion layer 53 layered on the anode catalyst layer 52 serves a role to supply fuel to the anode catalyst layer 52 evenly, and simultaneously combines a role of current collector for the anode catalyst layer 52. The cathode gas diffusion layer 55 layered on the cathode catalyst layer 54 serves a role to supply oxidant to the cathode catalyst layer 54 evenly, and simultaneously combines a role of current collector for the cathode catalyst layer 54. An anode conductive layer 57 is layered on the anode gas diffusion layer 53, and a cathode conductive layer 58 is layered on the cathode gas diffusion layer 55.

The anode conductive layer 57 and the cathode conductive layer 58 are each constituted of, for example, a mesh formed of conductive metal material such as Au, a porous film, a thin film, or the like. Note that rubber O-rings 59, 60 are interposed respectively between the electrolyte film 56 and the anode conductive layer 57 and between the electrolyte film 56 and the cathode conductive layer 58, and they prevent leakage of fuel or oxidant from the fuel cell unit (membrane electrode assembly) 2.

In the fuel containing unit 3, methanol fuel is filled as liquid fuel F. Further, the fuel containing unit 3 has an opening on a fuel cell unit 2 side, and the vapor/liquid separating film 51 is arranged between this opening portion of the fuel containing unit 3 and the fuel cell unit 2. The vapor/liquid separating film 51 is a vapor selecting and passing film that passes only vaporized components of the liquid fuel F, and does not pass liquid components. An example of a constituting material of the vapor/liquid separating film 51 is fluorine resin such as polytetrafluoroethylene. The vaporized components of the liquid fuel F mean an air-fuel mixture constituted of vaporized components of methanol and vaporized components of water when a methanol solution is used as the liquid fuel F, and mean vaporized components of methanol when pure methanol is used.

A moisture retention layer 61 is layered on the cathode conductive layer 58, and a surface layer 62 is layered further thereon. The surface layer 62 has a function to adjust an amount of air taken in as oxidant, and adjustment thereof can be performed by changing the number, size or the like of air introducing holes 63 formed in the surface layer 62. The moisture retention layer 61 serves a role of suppressing evaporation of water by being impregnated with part of water generated by the cathode catalyst layer 54, and also has a function to facilitate even diffusion of oxidant to the cathode catalyst layer 54 by introducing oxidant evenly to the cathode gas diffusion layer 55. The moisture retention layer 61 is constituted of a member having a porous structure for example, and an example of a specific constituting material thereof is a porous body of polyethylene, polypropylene, or the like.

Then, the vapor/liquid separating film 51, the fuel cell unit 2, the moisture retention layer 61, and the surface layer 62 are layered sequentially on the fuel containing unit 3, and further a stainless cover 64 for example is placed thereon to retain the entire body, thereby constituting the passive type DMFC (fuel cell body) 4 of this embodiment. The cover 64 has openings provided at positions corresponding to the air introducing holes 63 formed in the surface layer 62. A terrace 65 receiving claws 64a of the cover 64 is provided on the fuel containing unit 3, where the claws 64a are crimped onto this terrace 65 to thereby retain the entire fuel cell body 4 integrally by the cover 64. Although omitted in FIG. 18, the fuel supply unit 7 having the socket part 6 is provided on a lower surface side of the fuel containing unit 3 as shown in FIG. 1.

In the passive type DMFC (fuel cell body) 4 having the structure as described above, the liquid fuel F (methanol solution for example) in the fuel containing unit 3 vaporizes, and vaporized components thereof pass through the vapor/liquid separating film 51 and are supplied to the fuel cell unit 2. In the fuel cell unit 2, the vaporized components of the liquid fuel F are diffused in the anode gas diffusion layer 53 and supplied to the anode catalyst layer 52. The vaporized components supplied to the anode catalyst layer 52 cause internal reforming reaction of methanol as shown by the following equation (4).

$$CH_3OH + H_2O \rightarrow CO_2 + 6H^+ + 6e^- \ \cdots \ (4)$$

On the other hand, when pure methanol is used as the liquid fuel F, moisture vapor is not supplied from the fuel containing unit 3. Accordingly, water generated in the cathode catalyst layer 54 or water in the electrolyte film 56 is brought to react with methanol to cause the internal reforming reaction of the equation (4), or internal reforming reaction is caused by another reaction mechanism that does not require water, not by the internal reforming reaction of the equation (4).

Proton (H+) generated by the internal reforming reaction conducts through the electrolyte film 56 and reaches the cathode catalyst layer 54. Air (oxidant) taken in through the air introducing holes 63 in the surface layer 62 diffuses through the moisture retention layer 61, the cathode conductive layer 58, the cathode gas diffusion layer 55, and is supplied to the cathode catalyst layer 54. The air supplied to the cathode catalyst layer 54 causes reaction shown by the following equation (5). This reaction causes power generation reaction which accompanies generation of water.

$$(3/2)O_2 + 6H^+ + 6e^- \rightarrow 3H_2O \ \cdots \ (5)$$

As the power generation reaction based on the above-described reaction proceeds, the liquid fuel F (methanol solution or pure methanol for example) in the fuel containing unit 3 is consumed. Since the power generation reaction stops as soon as the liquid fuel F in the fuel containing unit 3 runs out, liquid fuel is supplied to the fuel containing unit 3 from the fuel cartridge 5 at the moment of run out or a moment before that. Supply of liquid fuel from the fuel cartridge 5 is implemented by inserting the nozzle part 9 of the fuel cartridge 5 side in the socket part 6 of the fuel cell body 4 side to thereby couple them.

Note that the present invention is not limited to any particular type, mechanism, or the like of a fuel cell as long

**EP 1 990 857 A1**

as it is a fuel cell supplying liquid fuel by a fuel cartridge, but is particularly preferable for passive type DMFCs which are currently miniaturized. The specific structure of the fuel cell is not particularly limited as well, where components can be modified and embodied in the range not departing from the technical scope of the present invention at the stage of implementation. Moreover, various modifications are possible by appropriately combining a plurality of components among the components shown in the above embodiment, deleting some of the components shown in the embodiment, and the like. The embodiment of the present invention can be extended or changed within the range of the technical scope of the present invention, and such extended and modified embodiments are also included in the technical scope of the present invention.

Industrial Applicability

In the fuel cartridge for the fuel cell according to an aspect of the present invention, the recess portion provided in the tip of the insertion portion of the nozzle part functions as an accommodating portion of remaining liquid fuel. Therefore, the operator does not contact the liquid fuel. Further, the tip portion of the valve mechanism in the nozzle head is arranged in the recess portion. Accordingly, when the operator applies an excessive load to the tip of the nozzle part while handling, or further when the operator drops it or applies an impact thereto by accident, damage to the valve mechanism on the tip side of the nozzle part can be prevented, and leakage of liquid fuel due to damage to the valve mechanism can be prevented. A fuel cell using such a fuel cartridge is excellent in safety and reliability, and hence can be effectively used as power supply for various devices and apparatuses.

**Claims**

1.  A fuel cartridge for a fuel cell, comprising:

    a cartridge body containing liquid fuel for the fuel cell; and
    a nozzle part having a nozzle head provided on said cartridge body and a valve mechanism arranged in the nozzle head, said nozzle part supplying the liquid fuel to a fuel cell body,
    wherein the nozzle head has a recess portion provided in a tip of an insertion portion which is inserted in a socket part of the fuel cell body.

2.  The fuel cartridge for the fuel cell according to claim 1,
    wherein the nozzle head has a nozzle hole opened in the recess portion, and the recess portion functions as an accommodating portion of the liquid fuel remaining on a tip of said nozzle part.

3.  The fuel cartridge for the fuel cell according to claim 1,
    wherein said nozzle part has a resin part which deforms so as to detach from the socket part when a bending load is applied to the fuel cartridge coupled to the fuel cell body.

4.  The fuel cartridge for the fuel cell according to claim 3,
    wherein said nozzle part detaches from the socket part by elastic or plastic deformation of the resin part with respect to the bending load.

5.  The fuel cartridge for the fuel cell according to claim 1,
    wherein the valve mechanism comprises a valve having a valve head and a valve stem, and an elastic member pressing the valve head to a valve sheet provided in the nozzle head so as to retain a channel for the liquid fuel in said nozzle part in a closed state.

6.  The fuel cartridge for the fuel cell according to claim 5,
    wherein a tip of the valve stem is arranged in the recess portion of the nozzle head.

7.  The fuel cartridge for the fuel cell according to claim 5,
    wherein the elastic member has a metal spring having a surface subjected to passivation processing.

8.  The fuel cartridge for the fuel cell according to claim 5,
    wherein the elastic member has a metal spring having a surface coated with gold.

9.  The fuel cartridge for the fuel cell according to claim 1,

11

wherein said nozzle part comprises an elastic member constituted of an elastomer having compression set in the range of 1 to 80 and hardness (type A) in the range of 40 to 70, and limit in operating hours of 10000 or longer in a performance test of the fuel cell.

10. A fuel cell, comprising:

the fuel cartridge for the fuel cell according to claim 1; and
a fuel cell body comprising a fuel containing unit having a socket part coupled detachably to the nozzle part of said fuel cartridge, the socket part having a valve mechanism inside, and an electromotive unit supplied with the liquid fuel from the fuel containing unit to generate electric power.

11. The fuel cell according to claim 10,
wherein the socket part comprises a socket body provided on the fuel containing unit, the valve mechanism arranged in the socket main body, and an elastic body holder arranged in the socket body and sealing a channel for the liquid fuel when the valve mechanism is released.

12. The fuel cell according to claim 11,
wherein the valve mechanism in the socket part comprises a valve having a valve head and a valve stem, and an elastic member pressing the valve head to a valve sheet provided in the socket body so as to retain a channel for the liquid fuel in the socket part in a closed state, and the elastic body holder is arranged on an outer periphery side of the valve stem.

13. The fuel cell according to claim 12,
wherein the valve mechanism in the nozzle part comprises a valve having a valve head and a valve stem, and an elastic member pressing the valve head to a valve sheet provided in the nozzle head so as to retain a channel for the liquid fuel in the nozzle part in a closed state, and when the nozzle part is coupled to the socket part, a tip of the elastic body holder of the socket part is fitted in the recess portion of the nozzle head.

14. The fuel cell according to claim 10, further comprising a plurality of seal parts which prevent leakage of the liquid fuel to the outside when the nozzle part and the socket part are coupled.

15. The fuel cell according to claim 10,
wherein the nozzle part has a cam portion provided so as to slope in a peripheral direction thereof, the socket part has a cam follower portion corresponding to the cam portion, and when an excessive rotational force is applied to said fuel cartridge, a coupling state of the nozzle part and the socket part is released based on the cam portion and the cam follower portion.

16. The fuel cell according to claim 15,
wherein the cam portion and the cam follower portion have shapes corresponding to the liquid fuel, and only when the nozzle part of said fuel cartridge containing the liquid fuel corresponding to said fuel cell body is coupled to the socket part, the cam portion and the cam follower portion engage with each other.

17. The fuel cell according to claim 15,
wherein the cam portion is provided along a peripheral surface of the insertion portion of the nozzle head.

18. The fuel cell according to claim 10,
wherein the nozzle part of said fuel cartridge has a resin part which deforms so as to detach from the socket part when a bending load is applied to said fuel cartridge coupled to the socket part of said fuel cell body.

19. The fuel cell according to claim 10,
wherein the socket part comprises an elastic member constituted of an elastomer having compression set in the range of 1 to 80 and hardness (type A) in the range of 40 to 70, and limit in operating hours of 10000 or longer in a performance test of the fuel cell.

20. A coupler, comprising:

a socket having a first valve element and a first biasing member biasing the first valve element in a closing direction; and

a plug having a second valve element and a second biasing member biasing the second valve element in a closing direction, said plug engaged with and coupled to said socket detachably,
wherein the first and second valve elements are released and brought into communication in a state that said socket and said plug are engaged with and coupled to each other; and
wherein the plug has a recess portion provided in a tip of an engaging portion engaged with the socket.

# FIG. 1

# FIG. 2

# FIG. 3

FIG. 4

FIG. 5

## FIG. 6

## FIG. 7

## FIG. 8

## FIG. 9

## FIG. 10

## FIG. 11

## FIG. 12

## FIG. 13

## FIG. 14

## FIG. 15

FIG. 16

FIG. 17

FIG. 18

## INTERNATIONAL SEARCH REPORT

| International application No. |
| --- |
| PCT/JP2007/000007 |

**A. CLASSIFICATION OF SUBJECT MATTER**
*H01M8/04*(2006.01)i, *H01M8/10*(2006.01)i

According to International Patent Classification (IPC) or to both national classification and IPC

**B. FIELDS SEARCHED**

Minimum documentation searched (classification system followed by classification symbols)
H01M8/04, H01M8/10

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2004-127824 A  (Hitachi Maxell, Ltd.), 22 April, 2004 (22.04.04), Par. Nos. [0016] to [0071]; all drawings (Family: none) | 1-20 |
| A | JP 2003-142135 A  (Hewlett-Packard Co.), 16 May, 2003 (16.05.03), Par. Nos. [0020] to [0029] & EP 1306917 A2         & US 2003/0082427 A1 | 1-20 |
| P,X | JP 2006-286364 A  (Toshiba Corp.), 19 October, 2006 (19.10.06), | 1,2,5-14,19, 20 |
| P,A | Full text (Family: none) | 3,4,15-18 |

☐ Further documents are listed in the continuation of Box C.          ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 March, 2007 (07.03.07) | 20 March, 2007 (20.03.07) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3413111 B
- JP 2004171844 A
- JP 2004127824 A